# EUROPEAN PATENT APPLICATION

(11) **EP 4 761 199 A1**
(43) Date of publication of application: **17.06.2026**
(21) Application number: 24870165.8
(22) Date of filing: 13.08.2024
(51) Int. Cl.: H04L 41/06

(54) **COMMUNICATION METHOD, COMMUNICATION APPARATUS, AND COMMUNICATION SYSTEM**

(30) Priority: 25.09.2023 CN 202311266585
(71) Applicant: HUAWEI TECHNOLOGIES CO., LTD., Shenzhen 518129 (CN)
(72) Inventor: ZHU, Weiwei, Shenzhen, Guangdong 518129 (CN); PAN, Dao, Shenzhen, Guangdong 518129 (CN); DING, Yi, Shenzhen, Guangdong 518129 (CN); LI, Qian, Shenzhen, Guangdong 518129 (CN); GONG, Ningxi, Shenzhen, Guangdong 518129 (CN); LI, Nan, Shenzhen, Guangdong 518129 (CN)
(74) Representative: Gill Jennings & Every LLP
(86) International application number: PCT/CN2024/111786
(87) International publication number: WO 2025/066617

(57) **Abstract**

This application provides a communication method, a communication apparatus, and a communication system, to improve Ethernet communication performance. The method may be performed by a first device, where the first device is connected to a second device through two twisted pairs or four twisted pairs, and the method includes: when the two twisted pairs are not faulty, sending first information to the second device, where the first information represents that the first device supports a variable-rate communication mode, a communication rate corresponding to the variable-rate communication mode is less than a first communication rate corresponding to a first communication mode and is greater than or equal to a second communication rate, and the first communication mode is a communication mode using the four twisted pairs; and receiving second information from the second device, where the second information represents that the second device supports the variable-rate communication mode.

## Description

### CROSS-REFERENCE TO RELATED APPLICATIONS

This application claims priority to Chinese Patent Application No. 202311266585.7, filed with the China National Intellectual Property Administration on September 25, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

With continuous evolution and development of Ethernet technologies, various types of Ethernet technologies emerge. The institute of electrical and electronics engineers (institute of electrical and electronics engineers, IEEE) has formulated related standards. For example, the IEEE 802.3 series standards specify that: An Ethernet technology 10BASE-T corresponds to a data transmission rate of 10 Mbps, an Ethernet technology 100BASE-T corresponds to a data transmission rate of 100 Mbps, an Ethernet technology 1000BASE-T corresponds to a data transmission rate of 1 Gbps, an Ethernet technology 10GBASE-T corresponds to a data transmission rate of 10 Gbps, an Ethernet technology 5GBASE-T corresponds to a data transmission rate of 5 Gbps, and an Ethernet technology 2.5GBASE-T corresponds to a data transmission rate of 2.5 Gbps.

10BASE-T and 100BASE-T use two twisted pairs as communication transmission media, and 1GBASE-T, 10GBASE-T, 2.5GBASE-T, and 5GBASE-T use four twisted pairs as communication transmission media. Therefore, devices at two ends that communicate by using any one of 1GBASE-T, 10GBASE-T, 2.5GBASE-T, and 5GBASE-T need to be connected through four twisted pairs. If a part of the twisted pairs are disconnected (that is, a connection is broken) or a part of cable connectors of the twisted pairs are in poor contact, the devices at two ends negotiate to use a communication mode (for example, 10BASE-T or 100BASE-T) requiring only two twisted pairs. In this case, a communication rate of the devices at two ends decreases from greater than or equal to 1 Gbps to 10 Mbps or 100 Mbps. This results in a significant decrease in the communication rate, thereby greatly reducing communication performance and causing poor user experience.

Therefore, how to improve Ethernet communication performance when a part of the twisted pairs used by the devices at two ends for Ethernet communication are disconnected or a part of cable connectors of the twisted pairs are in poor contact is an urgent problem to be resolved.

### SUMMARY

This application provides a communication method, a communication apparatus, and a communication system, to improve Ethernet communication performance.

According to a first aspect, an embodiment of this application provides a communication method, where the method may be performed by a first device or a module (such as a chip) applied to a first device, the first device is connected to a second device through two twisted pairs or four twisted pairs, and the method includes: when the two twisted pairs are not faulty, sending first information to the second device, where the first information represents that the first device supports a variable-rate communication mode, a communication rate corresponding to the variable-rate communication mode is less than a first communication rate corresponding to a first communication mode and is greater than or equal to a second communication rate, and the first communication mode is a communication mode using the four twisted pairs; and receiving second information from the second device, where the second information represents that the second device supports the variable-rate communication mode.

In the method, the first device is connected to the second device through the two twisted pairs or the four twisted pairs. When the two twisted pairs are not faulty, the first device and the second device may notify each other that the first device and the second device support the variable-rate communication mode, so that the two parties can negotiate to use the variable-rate communication mode. In addition, the communication rate corresponding to the variable-rate communication mode is less than the first communication rate corresponding to the communication mode using the four twisted pairs, but is greater than the second communication rate (that is, a communication rate corresponding to a communication mode using the two twisted pairs in a conventional technology, for example, 100 Mbps or 10 Mbps), so that communication performance is not greatly reduced when the first device communicates with the second device in the variable-rate communication mode.

In a possible design, the method further includes: performing data communication with the second device in the variable-rate communication mode. In this design, the first device and the second device perform data communication in the variable-rate communication mode, so that a communication rate between the first device and the second device does not decrease much compared with the communication rate of the first communication mode.

In a possible design, performing data communication with the second device in the variable-rate communication mode includes: performing data communication with the second device in the variable-rate communication mode through N twisted pairs of the four twisted pairs, where N is a positive integer less than 4. In this design, a quantity of twisted pairs required when the first device performs data communication with the second device in the variable-rate communication mode is less than the four twisted pairs, for example, may be one twisted pair, two twisted pairs, or three twisted pairs. This enables the variable-rate communication mode to be applicable to a plurality of twisted pair fault cases, thereby improving Ethernet reliability.

In a possible design, the first information further represents that the first device supports the first communication mode, and the second information further represents that the second device supports the first communication mode; the method further includes: training the first communication mode by using the four twisted pairs; and correspondingly, performing data communication with the second device in the variable-rate communication mode through the N twisted pairs of the four twisted pairs includes: when training the first communication mode by using the N twisted pairs succeeds, and training the first communication mode by using a twisted pair of the four twisted pairs other than the N twisted pairs fails, performing data communication with the second device in the variable-rate communication mode through the N twisted pairs. In this design, the first communication mode is trained by using the four twisted pairs. If the first communication mode is successfully trained by using only the N twisted pairs, data communication is performed in the variable-rate communication mode through the N twisted pairs.

In a possible design, the method further includes: performing fault detection on the four twisted pairs; and correspondingly, performing data communication with the second device in the variable-rate communication mode through the N twisted pairs of the four twisted pairs includes: when the N twisted pairs are not faulty, and a twisted pair of the four twisted pairs other than the N twisted pairs is faulty, performing data communication with the second device in the variable-rate communication mode through the N twisted pairs. In this design, fault detection is performed on the four twisted pairs, and when only the N twisted pairs of the four twisted pairs are not faulty, data communication is performed in the variable-rate communication mode through the N twisted pairs.

In a possible design, that the N twisted pairs are not faulty includes that the N twisted pairs are not disconnected, or the N twisted pairs are twisted pairs with better channel quality among the four twisted pairs.

In a possible design, the first information further represents that the first device supports the first communication mode, and the second information further represents that the second device supports the first communication mode; the method further includes: training the first communication mode by using the four twisted pairs; and correspondingly, performing data communication with the second device in the variable-rate communication mode through the N twisted pairs of the four twisted pairs includes: when a quantity of failures of training the first communication mode reaches G, performing data communication with the second device in the variable-rate communication mode through the N twisted pairs, where G is a positive integer greater than or equal to 1. In this design, when the quantity of failures of training the first communication mode reaches a preset value, data communication is performed in the variable-rate communication mode through the N twisted pairs.

In a possible design, the four twisted pairs include a first group of twisted pairs and a second group of twisted pairs, the first group of twisted pairs includes a twisted pair A and a twisted pair B, and the second group of twisted pairs includes a twisted pair C and a twisted pair D; and the method further includes: performing fault detection on the first group of twisted pairs in a first time window, and if the first group of twisted pairs is not faulty, determining the first group of twisted pairs as the two twisted pairs; or performing fault detection on the second group of twisted pairs in a second time window, and if the second group of twisted pairs is not faulty, determining the second group of twisted pairs as the two twisted pairs, where the first time window is different from the second time window. The first time window and the second time window are different time periods. In this design, fault detection is performed on the first group of twisted pairs and the second group of twisted pairs in different time periods, thereby avoiding a conflict during fault detection on the first group of twisted pairs and the second group of twisted pairs.

In a possible design, the method further includes: performing communication between a chip on which a physical layer of the first device is located and a chip on which a data link layer is located through a medium independent interface, where a communication rate of the medium independent interface is less than or equal to the communication rate corresponding to the variable-rate communication mode. In this design, when the physical layer of the first device and the data link layer of the first device are deployed on two different chips, the two chips may communicate with each other through the medium independent interface.

In a possible design, the first communication mode includes any one of the following: 10GBASE-T full-duplex communication, 5GBASE-T full-duplex communication, 2.5GBASE-T full-duplex communication, or 1GBASE-T full-duplex communication.

According to a second aspect, an embodiment of this application provides a communication device, where the communication device has a function of implementing the method according to the first aspect or the possible designs of the first aspect. The function may be implemented by hardware, or may be implemented by hardware executing corresponding software. The hardware or the software includes one or more modules corresponding to the function.

According to a third aspect, an embodiment of this application provides a communication apparatus, where the communication apparatus includes a module or unit configured to implement the method according to the first aspect or the possible designs of the first aspect.

According to a fourth aspect, an embodiment of this application provides a communication apparatus, including a processor and a communication interface, where the communication interface is configured to receive and send data; and the processor is coupled to a memory, and is configured to execute a computer program stored in the memory, to enable the apparatus to perform the method according to the first aspect or the possible designs of the first aspect.

According to a fifth aspect, an embodiment of this application provides a communication device, including a unit or a module configured to perform the steps of the method according to the first aspect or the possible designs of the first aspect.

According to a sixth aspect, an embodiment of this application further provides a computer-readable storage medium, where the computer-readable storage medium includes a computer program, and when the computer program is run on a computer or a processor, the computer or the processor is enabled to perform the method according to the first aspect or the possible design of the first aspect.

According to a seventh aspect, an embodiment of this application further provides a computer program product, where the computer product includes a computer program, and when the computer program is run on a computer or a processor, the computer or the processor is enabled to perform the method according to the first aspect or the possible design of the first aspect.

According to an eighth aspect, an embodiment of this application further provides a communication system, including a first device and a second device that are configured to perform the method according to the first aspect or the possible designs of the first aspect, where the first device is connected to the second device through N twisted pairs.

According to a ninth aspect, an embodiment of this application further provides a chip system, where the chip system includes a processor and a memory, the processor is coupled to the memory, the memory is configured to store a program or instructions, and when the program or the instructions are executed by the processor, the method according to the first aspect or the possible designs of the first aspect is implemented.

For beneficial effect of the second aspect to the ninth aspect, refer to related descriptions in the first aspect. Details are not described herein again.

### BRIEF DESCRIPTION OF DRAWINGS

FIG. 1 is an example diagram of an OSI model;
FIG. 2 is another example diagram of an OSI model;
FIG. 3 is a diagram of a structure of a communication system;
FIG. 4A is a diagram of a structure of a communication system according to an embodiment of this application;
FIG. 4B is a schematic flowchart of a communication method according to an embodiment of this application;
FIG. 5 is a diagram of fault detection on a twisted pair according to an embodiment of this application;
FIG. 6A and FIG. 6B are a schematic flowchart of another communication method according to an embodiment of this application;
FIG. 7A and FIG. 7B are a schematic flowchart of still another communication method according to an embodiment of this application;
FIG. 8 is a schematic flowchart of still another communication method according to an embodiment of this application;
FIG. 9A is a diagram 1 of a physical layer of a first device using a variable-rate communication mode according to an embodiment of this application;
FIG. 9B is a diagram 2 of a physical layer of a first device using a variable-rate communication mode according to an embodiment of this application;
FIG. 9C is a diagram 3 of a physical layer of a first device using a variable-rate communication mode according to an embodiment of this application;
FIG. 10A is a diagram 4 of a physical layer of a first device using a variable-rate communication mode according to an embodiment of this application;
FIG. 10B is a diagram 5 of a physical layer of a first device using a variable-rate communication mode according to an embodiment of this application;
FIG. 10C is a diagram 6 of a physical layer of a first device using a variable-rate communication mode according to an embodiment of this application;
FIG. 11A is a diagram 7 of a physical layer of a first device using a variable-rate communication mode according to an embodiment of this application;
FIG. 11B is a diagram 8 of a physical layer of a first device using a variable-rate communication mode according to an embodiment of this application;
FIG. 11C is a diagram 9 of a physical layer of a first device using a variable-rate communication mode according to an embodiment of this application;
FIG. 12A is a diagram 1 of a communication interface used between a physical layer of a first device and a data link layer of the first device according to an embodiment of this application;
FIG. 12B is a diagram 2 of a communication interface used between a physical layer of a first device and a data link layer of the first device according to an embodiment of this application;
FIG. 13 is a diagram of a communication apparatus according to an embodiment of this application; and
FIG. 14 is a diagram of a structure of an electronic device according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
(1) A twisted pair (twisted pair, TP) is the most commonly used transmission medium in integrated cabling projects, including two copper wires with an insulating protective layer. The two insulated copper wires are twisted together at specific density. An electromagnetic wave radiated by one wire during transmission can be offset by an electromagnetic wave emitted by the other wire, effectively reducing a degree of signal interference. The twisted pair is usually used as a transmission medium for Ethernet. In Ethernet, twisted pairs are classified into a twisted pair A, a twisted pair B, a twisted pair C, and a twisted pair D according to specifications and functions of the twisted pairs. In embodiments of this application, the twisted pair A and the twisted pair B may be used to negotiate a communication mode supported by devices at two ends connected through the twisted pair A and the twisted pair B. In addition, the twisted pair C and the twisted pair D may also be used to negotiate a communication mode supported by devices at two ends connected through the twisted pair C and the twisted pair D.
(2) Ethernet is a local area network technology used for data transmission between different communication devices. Ethernet is a common wired network technology, and is widely used in environments such as a home, an office, and a data center, and usually uses a transmission medium such as a twisted pair or an optical fiber. Ethernet supports various communication protocols, making Ethernet a common technology for data transmission between the Internet and local area network. In addition, Ethernet also supports full-duplex communication, and allows simultaneous sending and receiving operations, thereby improving data transmission efficiency and bandwidth utilization.

The IEEE organization has formulated standards related to the Ethernet technology. As shown in Table 1, the IEEE 802.3 standard defines that 10BASE-T corresponds to a communication rate of 10 Mbps, which is also referred to as a 10M mode; the IEEE 802.3u standard defines that 100BASE-T corresponds to a communication rate of 100 Mbps, which is also referred to as a 100M mode; the IEEE 802.3ab standard defines that 1GBASE-T corresponds to a communication rate of 1 Gbps, which is also referred to as a GE mode; the IEEE 802.3an standard defines that 10GBASE-T corresponds to a communication rate of 10 Gbps, which is also referred to as a G10E mode; the IEEE 802.3bz standard defines that 5GBASE-T corresponds to a communication rate of 5 Gbps, which is also referred to as a 5GE mode; and the IEEE 802.3bz standard defines that 2.5GBASE-T corresponds to a communication rate of 2.5 Gbps, which is also referred to as a 2.5GE mode. In addition, currently, 10BASE-T, 100BASE-T, 1GBASE-T, 2.5GBASE-T, 5GBASE-T, or 10GBASE-T uses four twisted pairs as transmission media.

**Table 1**

| Ethernet technology | IEEE Standard | Rate | Cable type | Common industry name |
|---|---|---|---|---|
| 10BASE-T | 802.3 | 10 Mbps | Twisted pair | 10M |
| 100BASE-T | 802.3u | 100 Mbps | Twisted pair | 100M |
| 1GBASE-T | 802.3ab | 1 Gbps | Twisted pair | GE |
| 10GBASE-T | 802.3an | 10 Gbps | Twisted pair | 10GE |
| 5GBASE-T | 802.3bz | 5 Gbps | Twisted pair | 5GE |
| 2.5GBASE-T | 802.3bz | 2.5 Gbps | Twisted pair | 2.5GE |

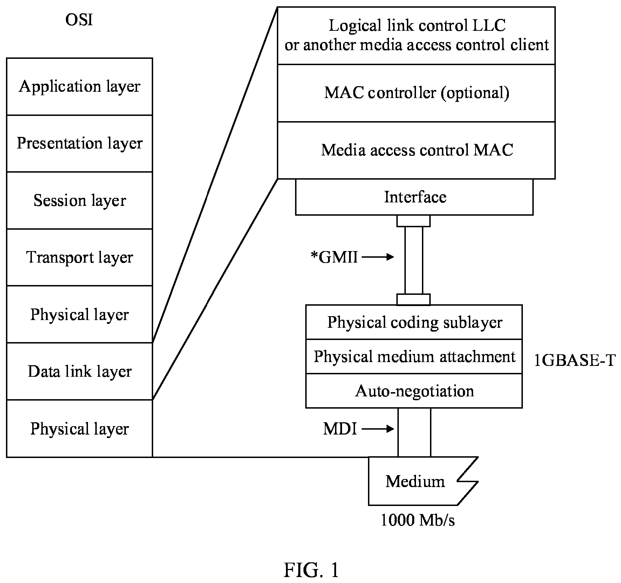

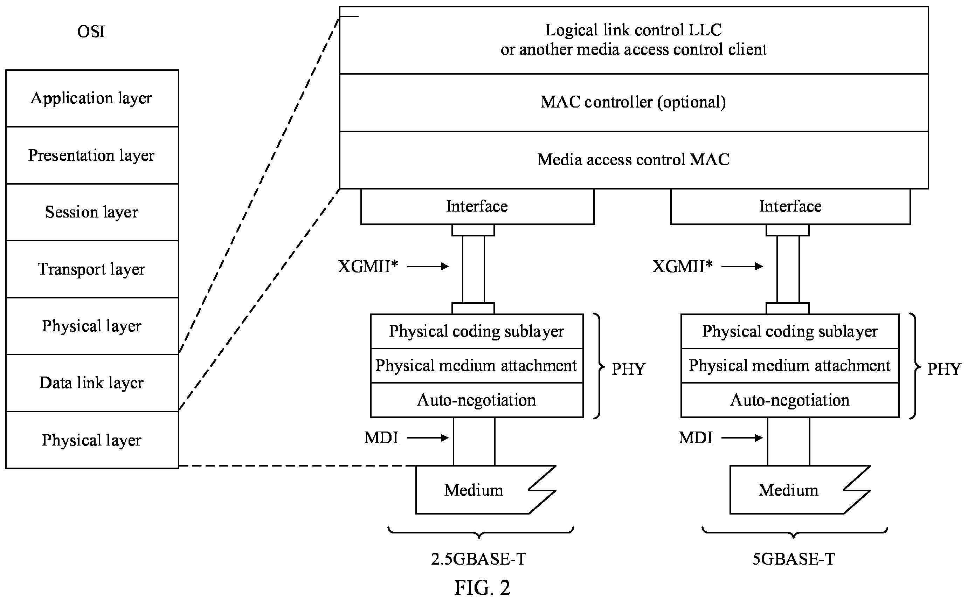

(3) An open system interconnection (open system interconnection, OSI) reference model is a framework for understanding and describing a computer network architecture. As shown in FIG. 1 or FIG. 2, the OSI reference model may divide a process of computer network communication into seven different layers. Each layer is responsible for a specific function and task. The layers from bottom to top are respectively a physical layer (physical layer, PHY), a data link layer (data link layer), a network layer (network layer), a transport layer (transport layer), a session layer (session layer), a presentation layer (presentation layer), or an application layer (application layer). The detailed explanation of each level is described below.

### Physical layer:

The physical layer is the bottom layer of the OSI model and is responsible for transmitting original bit streams between network devices. The physical layer handles transmission of electrical signals over a physical medium, for example, a transmission medium (such as a wire and an optical fiber) and a voltage. Functions of the physical layer include data coding, transmission rate, time sequence control, and physical connection establishment and maintenance. Further, as shown in FIG. 1 or FIG. 2, the physical layer may include a physical medium attachment (physical medium attachment, PMA) and a physical coding sublayer (physical coding sublayer, PCS). The PMA is a sublayer at the physical layer, and is responsible for converting a digital signal from a data link layer into an analog signal suitable for transmission over a specific transmission medium (such as a twisted pair or an optical fiber), and the PMA may further handle functions such as port rate matching and signal adjustment. The PCS is responsible for signal encoding and decoding between the physical layer and the data link layer, converts an analog signal from the PMA layer into a frame format, and encodes the analog signal to improve transmission reliability. The PCS layer is also responsible for frame synchronization, error detection, and error correction.

### Data link layer:

The data link layer is above the physical layer and provides point-to-point data transmission. The data link layer ensures data integrity and reliability by dividing data into data frames and transmits the frames over a physical medium. The data link layer is also responsible for error detection and correction, flow control, and access control, to ensure effectiveness of a plurality of devices sharing the same physical medium. The data link layer includes a logical link control (logical link control, LLC) sublayer and a media access control (media access control, MAC) sublayer. The LLC sublayer provides an interface to the network layer and handles tasks such as encapsulation and decapsulation, flow control, and error processing between different network layer protocols. The MAC sublayer controls the access right of the shared media, determines sending and receiving of data frames, and is responsible for addressing of physical addresses and error detection. The two sublayers cooperate with each other to implement functions of the data link layer, ensuring reliable data transmission and proper media access. Optionally, the data link layer may further include a MAC controller. The MAC controller may interact with the physical layer, and is responsible for sending a data frame provided by the data link layer (LLC) to a physical medium, and receiving a data frame received from the physical medium. In addition, the MAC controller may determine, according to a rule of a used media access control protocol (such as CSMA/CD or CSMA/CA), when to send a data frame, how to detect a conflict, and how to resolve a conflict; the MAC controller is responsible for managing a physical address (a MAC address) of a device, is used to uniquely identify each device on the shared media, and adds a destination address and a source address to each data frame to facilitate accurate data transmission and identification of the source device; and the MAC controller is also responsible for performing bottom-layer error detection and correction mechanisms, for example, cyclic redundancy check (CRC) used in the Ethernet. The MAC controller can detect bit errors that may occur during frame transmission and request retransmission when needed.

Communication between the physical layer and the data link layer is performed through a media independent interface (media independent interface, MII) (also referred to as a medium independent interface). However, the physical layer and data link layer use different communication interfaces in different Ethernet protocols. As shown in FIG. 1, in the 802.3ab standard, the 1000BASE-T technology uses a gigabit media independent interface (gigabit media independent interface, GMII). As shown in FIG. 2, the IEEE 802.3bz standard defines that the 5GBASE-T technology uses a XGMII, and the IEEE 802.3bz standard defines that the 2.5GBASE-T technology uses a XGMII.

### Network layer:

The network layer is responsible for logical addressing and routing functions. The presentation layer handles transmission of a data packet through the network, and transfers the data from a source node to a destination node by selecting an optimal path. The network layer uses an IP address for logical addressing and uses a routing protocol (such as an IP routing protocol) to determine the forwarding path of the data packet. The network layer also handles data packet fragmentation and reassembly, congestion control, and maintenance of interconnectivity between different networks.

### Transport layer:

The transport layer is above the network layer and provides an end-to-end data transmission service. The transport layer ensures reliability, integrity, and order of data transmission. The most commonly used protocol at the transport layer is a transmission control protocol (transmission control protocol, TCP), which provides connection-oriented reliable data transmission. In addition, a user datagram protocol (user datagram protocol, UDP) also belongs to the transport layer, and provides a connectionless transmission service and is applicable to an application that has high requirements on real-time performance.

### Session layer:

The session layer is responsible for session establishment, management, and termination. A session is a communication session between two applications in a communication system. The session layer provides a mechanism for establishing and synchronizing communication sessions between different nodes. The session layer also supports checkpoint and recovery functions for data exchange to ensure that a previous state can be restored after a communication failure or interruption.

### Presentation layer:

The presentation layer handles the format and presentation of data. The presentation layer is responsible for converting the data into a format suitable for transmission to ensure compatibility and interpretability between different systems. Functions of the presentation layer include data compression, data encryption, data format conversion (and data description).

### Application layer:

The application layer is the highest layer of the OSI model and provides a user-oriented service and application. The application layer includes various network applications, such as email, file transfer, telnet (Telnet), web browser (HTTP), and domain name system (DNS). The application layer interacts with a user and sends a user request to an underlying protocol stack for processing and transmission.

The following describes technical solutions related to embodiments of this application.

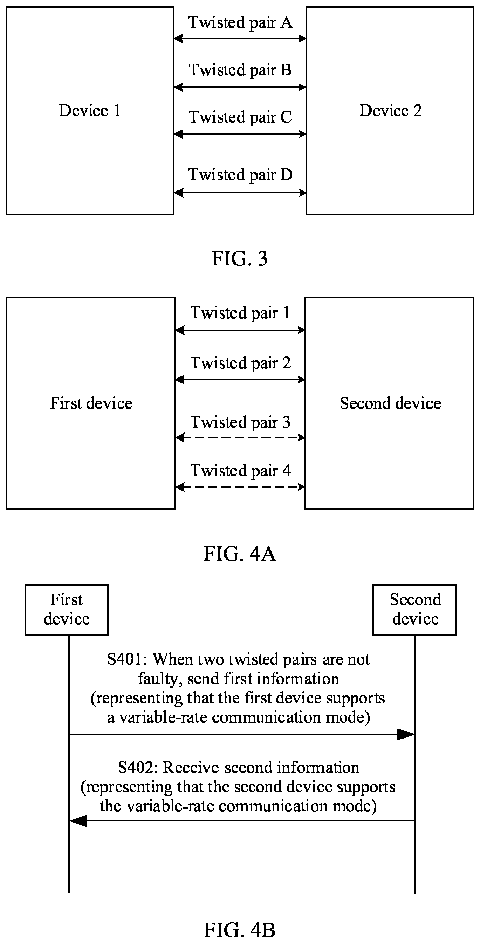

FIG. 3 shows a communication system according to an embodiment of this application. The communication system includes a device 1 and a device 2. The device 1 and the device 2 communicate with each other in any one of 10GBAES-T, 2.5GBASE-T, 5GBASE-T and 1GBASE-T communication modes. Therefore, the device 1 and the device 2 are connected through a twisted pair A, a twisted pair B, a twisted pair C, and a twisted pair D.

However, when one or more twisted pairs in the twisted pair A, the twisted pair B, the twisted pair C, and the twisted pair D are faulty, the device 1 and the device 2 cannot continue to use any one of 10GBAES-T, 2.5GBASE-T, 5GBASE-T, or 1GBASE-T for communication, and can only use 100BASE-T or 10BASE-T for communication. This causes a communication rate between the device 1 and the device 2 to decrease to 100 Mbps or 10 Mbps, thereby decreasing a rate of a data transmission service between the device 1 and the device 2, greatly reducing communication performance, and causing poor user experience.

Based on this, an embodiment of this application provides a communication method, to improve Ethernet communication performance. In the method, the first device is connected to the second device through two twisted pairs or four twisted pairs. When the two twisted pairs are not faulty, the first device and the second device may notify each other that the first device and the second device support a variable-rate communication mode, so that the two parties can negotiate to use the variable-rate communication mode. In addition, a communication rate corresponding to the variable-rate communication mode is less than a first communication rate corresponding to a communication mode using the four twisted pairs, but is greater than the first communication rate (for example, 1 Gbps), so that communication performance is not greatly reduced when the first device communicates with the second device in the variable-rate communication mode.

The following describes technical solutions in embodiments of this application with reference to specific accompanying drawings.

FIG. 4A shows a communication system according to an embodiment of this application. The communication system includes a first device and a second device. The first device and the second device are connected through two twisted pairs or four twisted pairs. The first device or the second device may be any electronic device having an Ethernet communication capability, for example, may be a server, a router, a switch, a network storage device, a network camera, or a video surveillance device.

Based on the communication system in FIG. 4A, this application provides a communication method. FIG. 4B is a schematic flowchart of the communication method. The method includes the following steps.

S401: When the two twisted pairs are not faulty, the first device sends first information to the second device, where the first information represents that the first device supports a variable-rate communication mode. Correspondingly, the second device receives the first information.

S402: The first device receives second information from the second device, where the second information represents that the second device supports the variable-rate communication mode. Correspondingly, the second device sends the second information.

In S401 and S402, when the two twisted pairs are not faulty, the first device and the second device may notify each other that the first device and the second device support the variable-rate communication mode, so that the two parties can subsequently perform data communication in the variable-rate communication mode. In this way, the first device and the second device implement a capability negotiation process through the two twisted pairs. The two twisted pairs may be, for example, a twisted pair A and a twisted pair B, or the two twisted pairs may be, for example, a twisted pair C and a twisted pair D.

In this embodiment of this application, a communication rate corresponding to the variable-rate communication mode is less than a first communication rate corresponding to a first communication mode, and is greater than or equal to a second communication rate (that is, a communication rate corresponding to a communication mode using the two twisted pairs in the conventional technology, for example, 100 Mbps or 10 Mbps). The first communication mode is a communication mode using the four twisted pairs, and the four twisted pairs may be, for example, a twisted pair A, a twisted pair B, a twisted pair C, and a twisted pair D.

In a possible implementation, the first communication mode may include but is not limited to any one of the following: 10GBASE-T full-duplex communication, 5GBASE-T full-duplex communication, 2.5GBASE-T full-duplex communication, or 1GBASE-T full-duplex communication. The first communication rate may be, for example, 1 Gbps.

Before the first device performs S401, if the first device and the second device are connected through the four twisted pairs, the first device may perform fault detection (that is, signal integrity detection) on the four twisted pairs. In a possible implementation, during fault detection, the four twisted pairs may be divided into a first group of twisted pairs and a second group of twisted pairs. The four twisted pairs include a twisted pair A, a twisted pair B, a twisted pair C, and a twisted pair D, the first group of twisted pairs may include the twisted pair A and the twisted pair B, and the second group of twisted pairs may include the twisted pair C and the twisted pair D. The first device may perform fault detection on the first group of twisted pairs in a first time window, and if the first group of twisted pairs is not faulty, determine the first group of twisted pairs as the two twisted pairs; and perform fault detection on the second group of twisted pairs in a second time window, and if the second group of twisted pairs is not faulty, determine the second group of twisted pairs as the two twisted pairs. The first time window is different from the second time window, the first time window includes one or more time periods, the second time window includes one or more time periods, but the time period included in the first time window does not overlap the time period included in the second time window. In this way, the first device or the second device separately performs fault detection on the first group of twisted pairs and the second group of twisted pairs in different time windows. For example, the twisted pair A and the twisted pair B are detected first, and then the twisted pair C and the twisted pair D are detected, thereby avoiding a detection conflict between the two groups of twisted pairs.

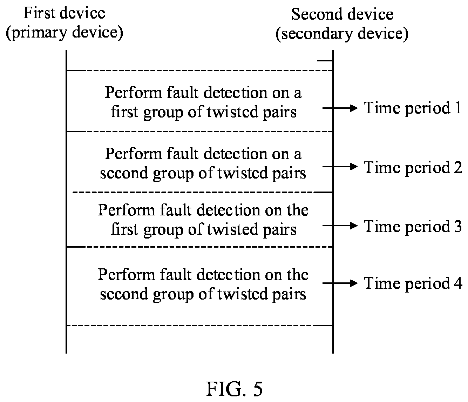

For example, as shown in FIG. 5, the first device is used as a primary device, the second device is used as a secondary device, a time period 1 and a time period 3 are used as an example of the first time window, and a time period 2 and a time period 4 are used as an example of the second time window. The first device or the second device performs fault detection on the first group of twisted pairs in the time period 1 and the time period 3, and the first device or the second device performs fault detection on the second group of twisted pairs in the time period 2 and the time period 4. Specifically, the first device may determine whether the first group of twisted pairs or the second group of twisted pairs is faulty by testing whether the first group of twisted pairs or the second group of twisted pairs can receive a pulse signal. The twisted pair is faulty in either of the following two cases:
Case 1: The twisted pair is disconnected or open-circuited. That is, a twisted pair cable is disconnected, and a communication link corresponding to the twisted pair is also disconnected. In this case, if the twisted pair can receive the pulse signal, it is considered that the twisted pair is not disconnected or is not open-circuited; or if the twisted pair cannot receive the pulse signal, it is considered that the twisted pair is disconnected or open-circuited.

For example, the first group of twisted pairs or the second group of twisted pairs are disconnected. For another example, one or more twisted pairs in the first group of twisted pairs are disconnected. For another example, one or more twisted pairs in the second group of twisted pairs are disconnected.

Case 2: Channel quality of the twisted pair is poor. That is, the twisted pair is not disconnected or is not open-circuited, but the twisted pair is in poor contact or the cable quality deteriorates (due to aging or the like). As a result, channel quality of the twisted pair is poor, and the twisted pair cannot support a communication rate corresponding to a current communication mode of the twisted pair. In this case, if the twisted pair can receive only a pulse signal with low signal strength, it is considered that the channel quality of the twisted pair is poor; or if the twisted pair can receive contiguous pulse signals with high signal strength, it is considered that the channel quality of the twisted pair is good.

For example, the first device and the second device are connected through four twisted pairs, and the first device and the second device communicate with each other in a 2.5GE mode. Two twisted pairs in the four twisted pairs can receive only pulse signals with low signal strength. This indicates that channel quality of the two twisted pairs is poor, and therefore the first device and the second device cannot continue to communicate with each other in the 2.5GE mode.

In this embodiment of this application, after the first device and the second device may notify each other that the first device and the second device support the variable-rate communication mode, when both the first device and the second device support the variable-rate communication mode, the first device and the second device may perform data communication in the variable-rate communication mode.

In a possible implementation, the first device may perform data communication with the second device in the variable-rate communication mode through N twisted pairs of the four twisted pairs. N is a positive integer less than 4.

For example, when N=3, the four twisted pairs include a twisted pair A, a twisted pair B, a twisted pair C, and a twisted pair D, and the N twisted pairs may include any three of the twisted pair A, the twisted pair B, the twisted pair C, or the twisted pair D. Correspondingly, the first device may perform data communication with the second device in the variable-rate communication mode through any three of the twisted pair A, the twisted pair B, the twisted pair C, or the twisted pair D.

For another example, when N=2, the four twisted pairs include a twisted pair A, a twisted pair B, a twisted pair C, and a twisted pair D, and the N twisted pairs may include any two of the twisted pair A, the twisted pair B, the twisted pair C, or the twisted pair D. Correspondingly, the first device may perform data communication with the second device in the variable-rate communication mode through any two of the twisted pair A, the twisted pair B, the twisted pair C, or the twisted pair D.

For another example, when N=1, the four twisted pairs include a twisted pair A, a twisted pair B, a twisted pair C, and a twisted pair D, and the N twisted pairs may include any one of the twisted pair A, the twisted pair B, the twisted pair C, or the twisted pair D. Correspondingly, the first device may perform data communication with the second device in the variable-rate communication mode through any one of the twisted pair A, the twisted pair B, the twisted pair C, or the twisted pair D.

In this way, a quantity of twisted pairs required when the first device performs data communication with the second device in the variable-rate communication mode is less than four twisted pairs. This enables the variable-rate communication mode to be applicable to a plurality of twisted pair fault cases, thereby improving Ethernet communication reliability in a plurality of scenarios.

That the first device determines the N twisted pairs that are not faulty from the four twisted pairs may include but is not limited to the following implementations:
Implementation 1: The first information further represents that the first device supports the first communication mode, and the second information further represents that the second device supports the first communication mode. Then, the first device may train the first communication mode by using the four twisted pairs. When training the first communication mode by using the N twisted pairs of the four twisted pairs succeeds, but training the first communication mode by using a twisted pair of the four twisted pairs other than the N twisted pairs fails, data communication is performed with the second device in the variable-rate communication mode through the N twisted pairs. In this way, the first communication mode is trained by using the four twisted pairs, and the N twisted pairs that are not faulty can be determined based on a training result of the first communication mode.

Implementation 2: The first device may perform fault detection (namely, signal integrity detection) on four twisted pairs. When the N twisted pairs are not faulty, and a twisted pair of the four twisted pairs other than the N twisted pairs is faulty, data communication is performed with the second device in the variable-rate communication mode through the N twisted pairs. In this way, the N twisted pairs that are not faulty can be determined by performing fault detection (that is, signal integrity detection) on the four twisted pairs.

It can be learned from the foregoing description that, when the twisted pair is faulty, the twisted pair is disconnected or the channel quality of the twisted pair is poor. Correspondingly, when the N twisted pairs are not faulty, the N twisted pairs are not disconnected or the channel quality of the N twisted pairs is good. Therefore, when the N twisted pairs are not faulty, that the first device performs data communication with the second device in the variable-rate communication mode through the N twisted pairs includes the following two cases:
Case 1: When the N twisted pairs are not disconnected, and a twisted pair of the four twisted pairs other than the N twisted pairs is disconnected, data communication is performed with the second device in the variable-rate communication mode through the N twisted pairs.

For example, N=3, and the four twisted pairs include a twisted pair A, a twisted pair B, a twisted pair C, and a twisted pair D. If the N twisted pairs include the twisted pair A, the twisted pair B, and the twisted pair D, and the twisted pair A, the twisted pair B, and the twisted pair D are not disconnected, but the twisted pair C is disconnected, the first device performs data communication with the second device in the variable-rate communication mode through the twisted pair A, the twisted pair B, and the twisted pair D. Alternatively, if the N twisted pairs include the twisted pair A, the twisted pair B, and the twisted pair C, and the twisted pair A, the twisted pair B, and the twisted pair C are not disconnected, but the twisted pair D is disconnected, the first device performs data communication with the second device in the variable-rate communication mode through the twisted pair A, the twisted pair B, and the twisted pair C. Alternatively, if the N twisted pairs include the twisted pair A, the twisted pair C, and the twisted pair D, and the twisted pair A, the twisted pair C, and the twisted pair D are not disconnected, but the twisted pair B is disconnected, the first device performs data communication with the second device in the variable-rate communication mode through the twisted pair A, the twisted pair C, and the twisted pair D. Alternatively, if the N twisted pairs include the twisted pair B, the twisted pair C, and the twisted pair D, and the twisted pair B, the twisted pair C, and the twisted pair D are not disconnected, but the twisted pair A is disconnected, the first device performs data communication with the second device in the variable-rate communication mode through the twisted pair B, the twisted pair C, and the twisted pair D.

For another example, N=2, and the four twisted pairs include a twisted pair A, a twisted pair B, a twisted pair C, and a twisted pair D. If the N twisted pairs include the twisted pair A and the twisted pair B, the twisted pair A and the twisted pair B are not disconnected, and the twisted pair C and the twisted pair D are disconnected, the first device performs data communication with the second device in the variable-rate communication mode through the twisted pair A and the twisted pair B. Alternatively, if the N twisted pairs include the twisted pair C and the twisted pair D, and the twisted pair C and the twisted pair D are not disconnected, but the twisted pair A and the twisted pair B are disconnected, the first device performs data communication with the second device in the variable-rate communication mode through the twisted pair C and the twisted pair D. Alternatively, if the N twisted pairs include the twisted pair A and the twisted pair C, and the twisted pair A and the twisted pair C are not disconnected, but the twisted pair B and the twisted pair D are disconnected, the first device performs data communication with the second device in the variable-rate communication mode through the twisted pair A and the twisted pair C. Alternatively, if the N twisted pairs include the twisted pair B and the twisted pair D, and the twisted pair B and the twisted pair D are not disconnected, but the twisted pair A and the twisted pair C are disconnected, the first device performs data communication with the second device in the variable-rate communication mode through the twisted pair B and the twisted pair D. Alternatively, if the N twisted pairs include the twisted pair A and the twisted pair D, and the twisted pair A and the twisted pair D are not disconnected, but the twisted pair B and the twisted pair C are disconnected, the first device performs data communication with the second device in the variable-rate communication mode through the twisted pair A and the twisted pair D. Alternatively, if the N twisted pairs include the twisted pair B and the twisted pair C, and the twisted pair B and the twisted pair C are not disconnected, but the twisted pair A and the twisted pair D are disconnected, the first device performs data communication with the second device in the variable-rate communication mode through the twisted pair B and the twisted pair C.

For another example, N=1, and the four twisted pairs include a twisted pair A, a twisted pair B, a twisted pair C, and a twisted pair D. If the N twisted pairs include the twisted pair A, the twisted pair A is not disconnected, and the twisted pair B, the twisted pair C, and the twisted pair D are disconnected, the first device performs data communication with the second device in the variable-rate communication mode through the twisted pair A. Alternatively, if the N twisted pairs include the twisted pair B, the twisted pair B is not disconnected, and the twisted pair A, the twisted pair C, and the twisted pair D are disconnected, the first device performs data communication with the second device in the variable-rate communication mode through the twisted pair B. Alternatively, if the N twisted pairs include the twisted pair C, the twisted pair C is not disconnected, and the twisted pair A, the twisted pair B, and the twisted pair D are disconnected, the first device performs data communication with the second device in the variable-rate communication mode through the twisted pair C. Alternatively, if the N twisted pairs include the twisted pair D, the twisted pair D is not disconnected, and the twisted pair A, the twisted pair B, and the twisted pair C are disconnected, the first device performs data communication with the second device in the variable-rate communication mode through the twisted pair D.

Case 2: When the four twisted pairs are not disconnected, and the N twisted pairs are twisted pairs with better channel quality in the four twisted pairs, data communication is performed with the second device in the variable-rate communication mode through the N twisted pairs.

For example, N=1, and the four twisted pairs include a twisted pair A, a twisted pair B, a twisted pair C, and a twisted pair D. If the N twisted pairs include the twisted pair D, channel quality of the twisted pair A, the twisted pair B, and the twisted pair C is poor, and channel quality of the twisted pair D is good, the first device performs data communication with the second device in the variable-rate communication mode through the twisted pair D. Alternatively, if the N twisted pairs include the twisted pair C, channel quality of the twisted pair A, the twisted pair B, and the twisted pair D is poor, and channel quality of the twisted pair C is good, the first device performs data communication with the second device in the variable-rate communication mode through the twisted pair C. Alternatively, if the N twisted pairs include the twisted pair A, channel quality of the twisted pair D, the twisted pair B, and the twisted pair C is poor, and channel quality of the twisted pair A is good, the first device performs data communication with the second device in the variable-rate communication mode through the twisted pair A. Alternatively, if the N twisted pairs include the twisted pair B, channel quality of the twisted pair A, the twisted pair D, and the twisted pair C is poor, and channel quality of the twisted pair B is good, the first device performs data communication with the second device in the variable-rate communication mode through the twisted pair B.

For another example, N=2, and the four twisted pairs include a twisted pair A, a twisted pair B, a twisted pair C, and a twisted pair D. If the N twisted pairs include the twisted pair A and twisted pair B, channel quality of the twisted pair A and the twisted pair B is good, and channel quality of the twisted pair C and the twisted pair D is poor, the first device performs data communication with the second device in the variable-rate communication mode through the twisted pair A and the twisted pair B. Alternatively, if the N twisted pairs include the twisted pair C and the twisted pair D, and channel quality of the twisted pair C and the twisted pair D is good, but channel quality of the twisted pair A and the twisted pair B is poor, the first device performs data communication with the second device in the variable-rate communication mode through the twisted pair C and the twisted pair D. Alternatively, if the N twisted pairs include the twisted pair A and the twisted pair C, and channel quality of the twisted pair A and the twisted pair C is good, but channel quality of the twisted pair B and the twisted pair D is poor, the first device performs data communication with the second device in the variable-rate communication mode through the twisted pair A and the twisted pair C. Alternatively, if the N twisted pairs include the twisted pair B and the twisted pair D, and channel quality of the twisted pair B and the twisted pair D is good, but channel quality of the twisted pair A and the twisted pair C is poor, the first device performs data communication with the second device in the variable-rate communication mode through the twisted pair B and the twisted pair D. Alternatively, if the N twisted pairs include the twisted pair A and the twisted pair D, and channel quality of the twisted pair A and the twisted pair D is good, but channel quality of the twisted pair B and the twisted pair C is poor, the first device performs data communication with the second device in the variable-rate communication mode through the twisted pair A and the twisted pair D. Alternatively, if the N twisted pairs include the twisted pair B and the twisted pair C, and channel quality of the twisted pair B and the twisted pair C is good, but channel quality of the twisted pair A and the twisted pair D is poor, the first device performs data communication with the second device in the variable-rate communication mode through the twisted pair B and the twisted pair C.

For another example, N=3, and the four twisted pairs include a twisted pair A, a twisted pair B, a twisted pair C, and a twisted pair D. If the N twisted pairs include the twisted pair A, the twisted pair B, and the twisted pair D, and channel quality of the twisted pair A, the twisted pair B, and the twisted pair D is good, but channel quality of the twisted pair C is poor, the first device performs data communication with the second device in the variable-rate communication mode through the twisted pair A, the twisted pair B, and the twisted pair D. Alternatively, if the N twisted pairs include the twisted pair A, the twisted pair B, and the twisted pair C, and channel quality of the twisted pair A, the twisted pair B, and the twisted pair C is good, but channel quality of the twisted pair D is poor, the first device performs data communication with the second device in the variable-rate communication mode through the twisted pair A, the twisted pair B, and the twisted pair C. Alternatively, if the N twisted pairs include the twisted pair A, the twisted pair C, and the twisted pair D, and channel quality of the twisted pair A, the twisted pair C, and the twisted pair D is good, but channel quality of the twisted pair B is poor, the first device performs data communication with the second device in the variable-rate communication mode through the twisted pair A, the twisted pair C, and the twisted pair D. Alternatively, if the N twisted pairs include the twisted pair B, the twisted pair C, and the twisted pair D, and channel quality of the twisted pair B, the twisted pair C, and the twisted pair D is good, but channel quality of the twisted pair A is poor, the first device performs data communication with the second device in the variable-rate communication mode through the twisted pair B, the twisted pair C, and the twisted pair D.

For ease of understanding, the following describes in more detail technical solutions provided in embodiments of this application with reference to Example 1 to Example 3. In Example 1 to Example 3, N equal to 2 is used as an example, that is, the first device performs data communication with the second device in the variable-rate communication mode through two twisted pairs.

### Example 1:

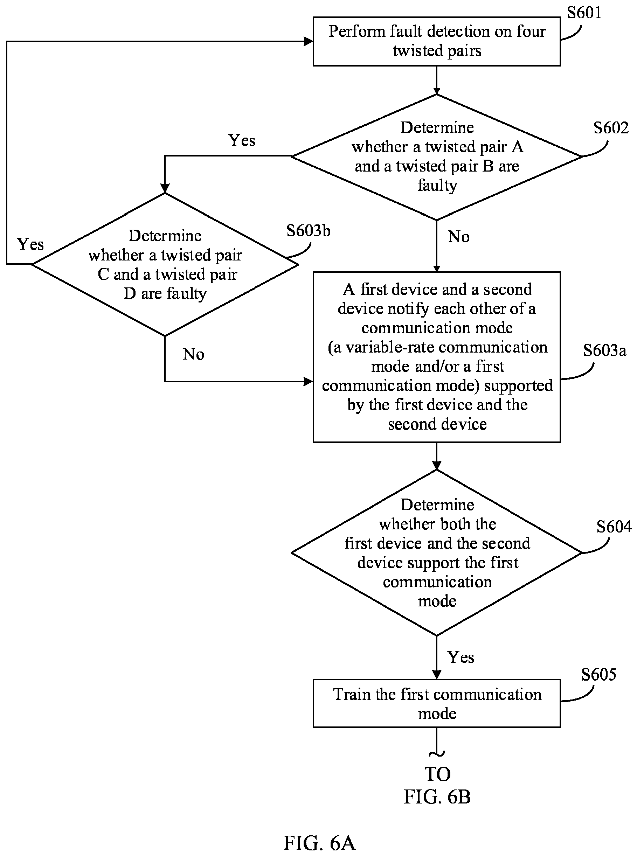

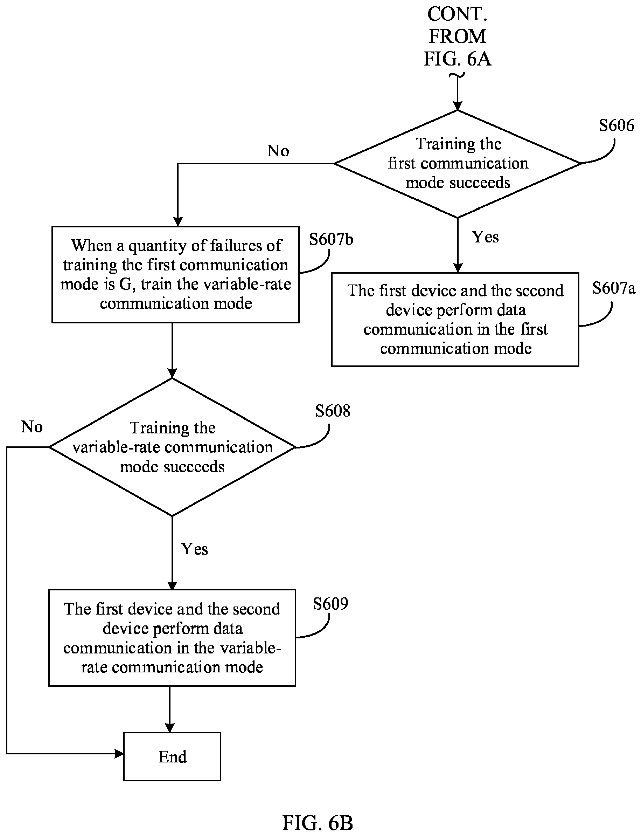

As shown in FIG. 6A and FIG. 6B, another communication method according to an embodiment of this application includes the following procedure.

S601: A first device performs fault detection on four twisted pairs.

It can be learned from the foregoing description that a twisted pair fault includes a twisted pair disconnection or poor channel quality of the twisted pair.

In a case, the four twisted pairs include a twisted pair A, a twisted pair B, a twisted pair C, and a twisted pair D. The first device may determine whether the twisted pair A, the twisted pair B, the twisted pair C, and the twisted pair D are disconnected by testing whether the twisted pair A, the twisted pair B, the twisted pair C, and the twisted pair D can receive a pulse signal. If the twisted pair A, the twisted pair B, the twisted pair C, and the twisted pair D can receive the pulse signal, it is considered that the twisted pair A, the twisted pair B, the twisted pair C, and the twisted pair D are not disconnected; or if one or more twisted pairs in the twisted pair A, the twisted pair B, the twisted pair C, and the twisted pair D cannot receive the pulse signal, it is considered that the one or more twisted pairs are disconnected.

In another case, the four twisted pairs include a twisted pair A, a twisted pair B, a twisted pair C, and a twisted pair D, and the twisted pair A, the twisted pair B, the twisted pair C, and the twisted pair D all can receive pulse signals, the first device may determine channel quality of the twisted pair A, the twisted pair B, the twisted pair C, and the twisted pair D based on signal quality of the pulse signals received by the twisted pair A, the twisted pair B, the twisted pair C, and the twisted pair D. If the signal quality of the pulse signals that can be received by the twisted pair A, the twisted pair B, the twisted pair C, and the twisted pair D is good, it is considered that the channel quality of the twisted pair A, the twisted pair B, the twisted pair C, and the twisted pair D is good; or if one or more twisted pairs in the twisted pair A, the twisted pair B, the twisted pair C, and the twisted pair D cannot receive pulse signals, it is considered that channel quality of the one or more twisted pairs is poor.

S602: The first device determines whether the twisted pair A and the twisted pair B are faulty.

When the twisted pair A and the twisted pair B are not faulty, step S603a is performed, and the first device and a second device may notify each other of a communication mode supported by the first device and the second device through the twisted pair A and the twisted pair B. When the twisted pair A and the twisted pair B are faulty, step S603b is performed.

S603a: The first device and the second device notify each other of a communication mode supported by the first device and the second device, where the communication mode includes a variable-rate communication mode and/or a first communication mode.

S603b: The first device determines whether the twisted pair C and the twisted pair D are faulty.

If the twisted pair C and the twisted pair D are not faulty, step S603a is performed, and the first device and the second device may notify each other of the communication mode supported by the first device and the second device through the twisted pair C and the twisted pair D. If the twisted pair C and the twisted pair D are faulty, step S601 is performed, and the first device performs fault detection on the four twisted pairs again.

S604: The first device determines whether both the first device and the second device support the first communication mode.

When both the first device and the second device support the first communication mode, S605 is performed. When neither the first device nor the second device supports the first communication mode, or when the first device or the second device does not support the first communication mode, the first device determines whether both the first device and the second device support the variable-rate communication mode, and when both the first device and the second device support the variable-rate communication mode, the variable-rate communication mode is trained.

S605: The first device trains the first communication mode.

The first device trains the first communication mode, so that the first device can determine an effective communication rate, to maximize network performance and implement reliable data transmission. For example, the first communication mode is 1GBASE-T full-duplex communication, and after the 1GBASE-T full-duplex communication is trained, a communication rate of the first device is 1 Gbps. For another example, the first communication mode is 2.5GBASE-T full-duplex communication, and after the 2.5GBASE-T full-duplex communication is trained, a communication rate of the first device is 2.5 Gbps. For another example, the first communication mode is 5GBASE-T full-duplex communication, and after the 5GBASE-T full-duplex communication is trained, a communication rate of the first device is 5 Gbps. For another example, the first communication mode is 10GBASE-T full-duplex communication, and after the 10GBASE-T full-duplex communication is trained, a communication rate of the first device is 10 Gbps.

S606: The first device determines whether training the first communication mode succeeds.

When training the first communication mode succeeds, S607a is performed. When training the first communication mode fails, a quantity of failures of training the first communication mode is counted, and when the quantity of failures of training the first communication mode is G, S607b is performed. G is an integer greater than or equal to 1. For example, G=1, that is, when training the first communication mode fails, the first device may train the variable-rate communication mode. For another example, G=2, that is, when a quantity of failures of training the first communication mode is 2, the first device trains the variable-rate communication mode.

S607a: The first device and the second device perform data communication in the first communication mode.

S607b: When the quantity of failures of training the first communication mode is G, train the variable-rate communication mode.

S608: The first device determines whether training the variable-rate communication mode succeeds.

Specifically, when training the variable-rate communication mode succeeds, S609 is performed. When training the variable-rate communication mode fails, the first device may communicate with the second device in a second communication mode, and a communication rate corresponding to the second communication mode is less than a communication rate corresponding to the variable-rate communication mode. For example, if the first communication mode corresponds to a communication rate of 2.5 Gbps, and the variable-rate communication mode using two twisted pairs is used, the communication rate corresponding to the variable-rate communication mode may be 1.25 Gbps. In this case, the second communication mode may be 10MBASE-T full-duplex communication or 100MBASE-T full-duplex communication using two twisted pairs. Alternatively, when training the variable-rate communication mode fails, the data communication procedure between the first device and the second device is ended.

S609: The first device and the second device perform data communication in the variable-rate communication mode.

When the twisted pair A and the twisted pair B are not faulty, the first device and the second device may perform data communication in the variable-rate communication mode through the twisted pair A and the twisted pair B; or when the twisted pair C and the twisted pair D are not faulty, the first device and the second device may perform data communication in the variable-rate communication mode through the twisted pair C and the twisted pair D.

### Example 2

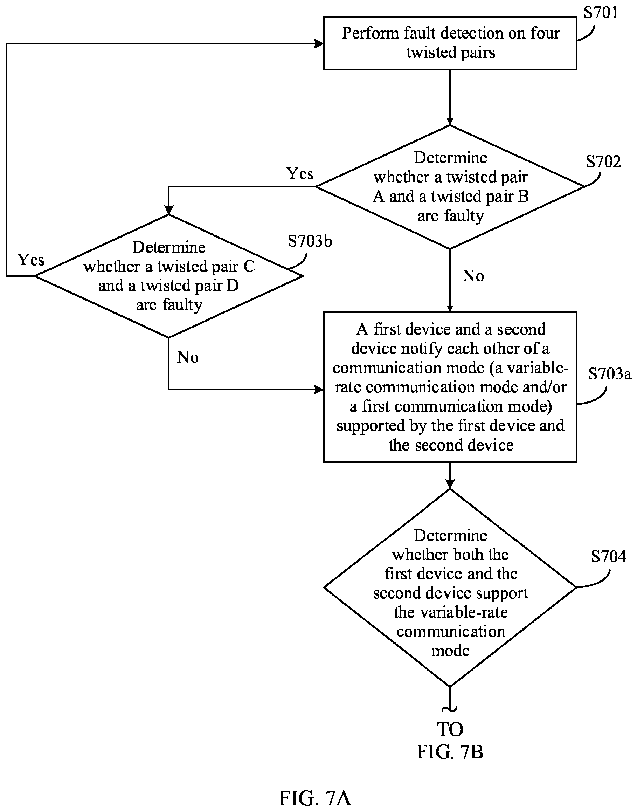

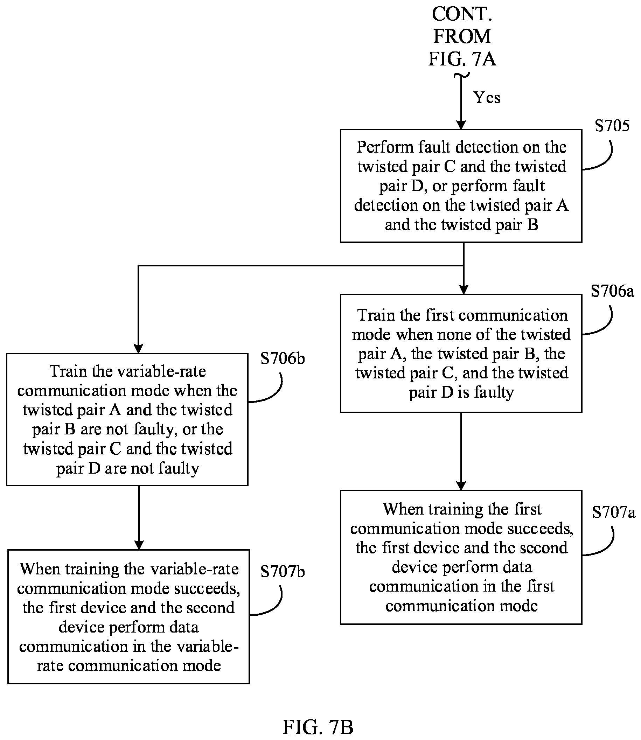

As shown in FIG. 7A and FIG. 7B, another communication method according to an embodiment of this application includes the following procedure.

S701: A first device performs fault detection on four twisted pairs.

For a detailed description of S701, refer to the related description of 601. Details are not described herein again.

S702: The first device determines whether a twisted pair A and a twisted pair B are faulty.

When the twisted pair A and the twisted pair B are not faulty, step S703a is performed, and the first device and a second device may notify each other of a communication mode supported by the first device and the second device through the twisted pair A and the twisted pair B. When the twisted pair A and the twisted pair B are faulty, step S703b is performed.

S703a: The first device and the second device notify each other of a communication mode supported by the first device and the second device, where the communication mode includes a variable-rate communication mode and/or a first communication mode.

S703b: The first device determines whether a twisted pair C and a twisted pair D are faulty.

If the twisted pair C and the twisted pair D are not faulty, step S703a is performed, and the first device and the second device may notify each other of the communication mode supported by the first device and the second device through the twisted pair C and the twisted pair D. If the twisted pair C and the twisted pair D are faulty, step S701 is performed, and fault detection is performed again on the four twisted pairs.

S704: The first device determines whether both the first device and the second device support the variable-rate communication mode.

For a detailed description of S704, refer to the related description of 604. Details are not described herein again.

S705: The first device performs fault detection on the twisted pair C and the twisted pair D, or the first device performs fault detection on the twisted pair A and the twisted pair B.

In a case, when it is determined that the twisted pair A and the twisted pair B are not faulty, fault detection is performed on the twisted pair C and the twisted pair D. If the twisted pair C and the twisted pair D are not faulty, S706a and S707a are performed; or if the twisted pair C and the twisted pair D are faulty, S706b and S707b are performed. Alternatively, if the twisted pair C and the twisted pair D are not faulty, but signal quality of the twisted pair C and the twisted pair D is poorer than signal quality of the twisted pair A and the twisted pair B, the first device trains the variable-rate communication mode by using the twisted pair A and the twisted pair B, and when training succeeds, performs data communication with the second device in the variable-rate communication mode.

In another case, when it is determined that the twisted pair C and the twisted pair D are not faulty, fault detection is performed on the twisted pair A and the twisted pair B. If the twisted pair A and the twisted pair B are not faulty, S706a and S707a are performed; or if the twisted pair A and the twisted pair B are faulty, S706b and S707b are performed. Alternatively, if the twisted pair A and the twisted pair B are not faulty, but signal quality of the twisted pair A and the twisted pair B is poorer than signal quality of the twisted pair C and the twisted pair D, the first device trains the variable-rate communication mode by using the twisted pair C and the twisted pair D, and when training succeeds, performs data communication with the second device in the variable-rate communication mode.

S706a: Train the first communication mode when none of the twisted pair A, the twisted pair B, the twisted pair C, and the twisted pair D is faulty.

Specifically, the first device may train the first communication mode by using the twisted pair A, the twisted pair B, the twisted pair C, and the twisted pair D.

S707a: When training the first communication mode succeeds, the first device and the second device perform data communication in the first communication mode.

Specifically, the first device may perform data communication with the second device in the first communication mode through the twisted pair A, the twisted pair B, the twisted pair C, and the twisted pair D.

S706b: Train the variable-rate communication mode when the twisted pair A and the twisted pair B are not faulty, or the twisted pair C and the twisted pair D are not faulty.

In a case, the first device may train the variable-rate communication mode by using the twisted pair A and the twisted pair B.

In another case, the first device may train the variable-rate communication mode by using the twisted pair C and the twisted pair D.

S707b: When training the variable-rate communication mode succeeds, the first device and the second device perform data communication in the variable-rate communication mode.

In a case, the first device may perform data communication with the second device in the variable-rate communication mode through the twisted pair A and the twisted pair B.

In another case, the first device may perform data communication with the second device in the variable-rate communication mode through the twisted pair C and the twisted pair D.

### Example 3

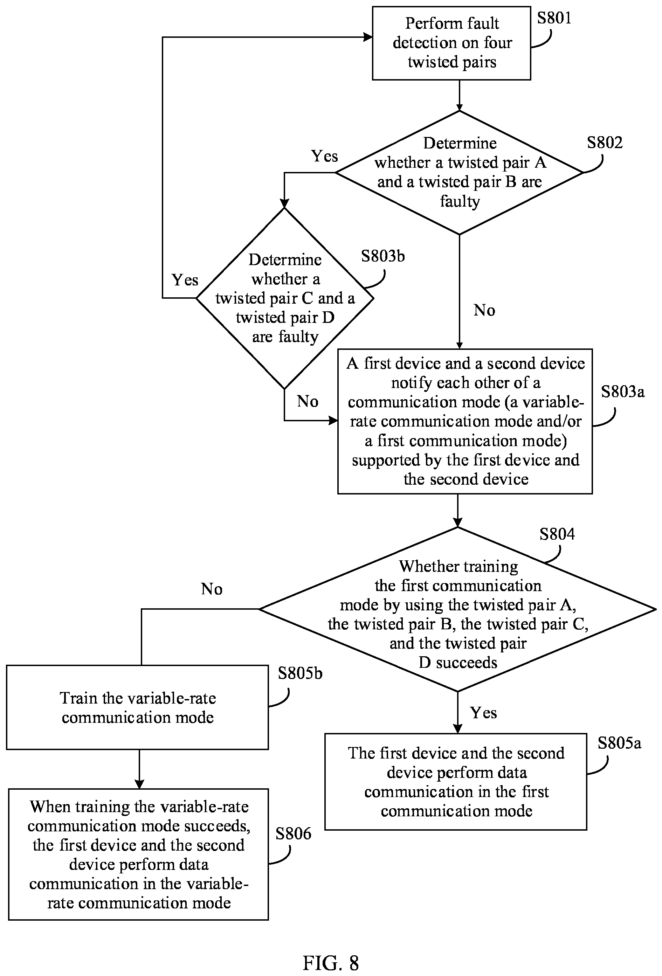

As shown in FIG. 8, another communication method according to an embodiment of this application includes the following procedure.

S801: A first device performs fault detection on four twisted pairs.

For a detailed description of S801, refer to the related description of 601. Details are not described herein again.

S802: The first device determines whether a twisted pair A and a twisted pair B are faulty.

When the twisted pair A and the twisted pair B are not faulty, step S803a is performed, and the first device and a second device may notify each other of a communication mode supported by the first device and the second device through the twisted pair A and the twisted pair B. When the twisted pair A and the twisted pair B are faulty, step S803b is performed.

S803a: The first device and the second device notify each other of a communication mode supported by the first device and the second device, where the communication mode includes a variable-rate communication mode and/or a first communication mode.

S803b: The first device determines whether a twisted pair C and a twisted pair D are faulty.

If the twisted pair C and the twisted pair D are not faulty, step S803a is performed, and the first device and the second device may notify each other of the communication mode supported by the first device and the second device through the twisted pair C and the twisted pair D. If the twisted pair C and the twisted pair D are faulty, step S801 is performed, and fault detection is performed again on the four twisted pairs.

S804: Whether the first device successfully trains the first communication mode by using the twisted pair A, the twisted pair B, the twisted pair C, and the twisted pair D.

When training the first communication mode succeeds, S805a is performed; or when training the first communication mode fails, S805b is performed.

S805a: The first device and the second device perform data communication in the first communication mode.

Specifically, the first device and the second device perform data communication in the first communication mode through the twisted pair A, the twisted pair B, the twisted pair C, and the twisted pair D.

S805b: The first device trains the variable-rate communication mode.

In a case, when training the first communication mode by using the twisted pair A and the twisted pair B succeeds, but training the first communication mode by using the twisted pair C and the twisted pair D fails, the first device trains the variable-rate communication mode by using the twisted pair A and the twisted pair B.

In another case, when training the first communication mode by using the twisted pair A and the twisted pair B fails, but training the first communication mode by using the twisted pair C and the twisted pair D succeeds, the first device trains the variable-rate communication mode by using the twisted pair C and the twisted pair D.

S806: When training the variable-rate communication mode succeeds, the first device and the second device perform data communication in the variable-rate communication mode.

In a case, the first device trains the variable-rate communication mode by using the twisted pair A and the twisted pair B, and training the variable-rate communication mode succeeds. The first device and the second device perform data communication in the variable-rate communication mode through the twisted pair A and the twisted pair B.

In another case, the first device trains the variable-rate communication mode by using the twisted pair C and the twisted pair D, and training the variable-rate communication mode succeeds. The first device and the second device perform data communication in the variable-rate communication mode through the twisted pair C and the twisted pair D.

It should be understood that, in the foregoing Example 1 to Example 3, the second device may also perform a same procedure as that performed by the first device, to train the variable-rate communication mode and/or the first communication mode.

In this embodiment of this application, when the first device and the second device perform data communication in the variable-rate communication mode, both physical layers of the first device and the second device operate in the variable-rate communication mode. Specifically, both the PCS and the PMA at the physical layer operate in the variable-rate communication mode.

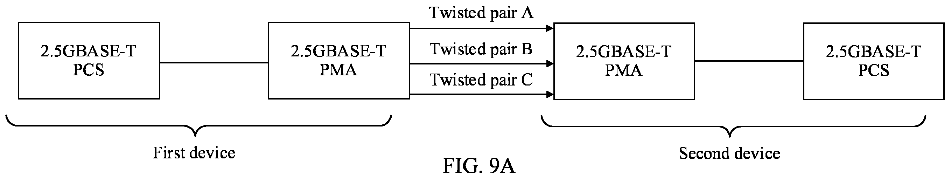

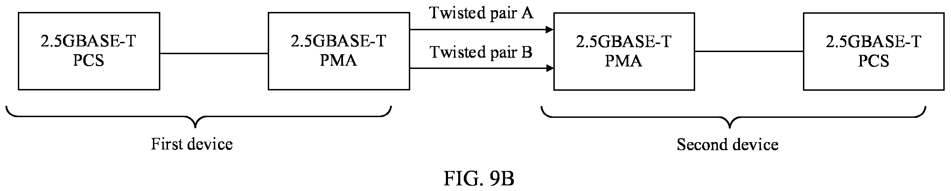

Example 1: As shown in FIG. 9A and FIG. 9B, 2.5GBASE-T full-duplex communication is used as an example of the first communication mode, and the variable-rate communication mode may be 2.5GBASE-T variable-rate full-duplex communication. The 2.5GBASE-T full-duplex communication is a communication mode using four twisted pairs. Correspondingly, the 2.5GBASE-T variable-rate full-duplex communication may be a communication mode using three twisted pairs, a communication mode using two twisted pairs, or a communication mode using one twisted pair.

Case 1: As shown in FIG. 9A, if the first device and the second device perform data communication in the 2.5GBASE-T variable-rate full-duplex communication mode through a twisted pair A, a twisted pair B, and a twisted pair C (that is, three twisted pairs are used), a communication rate corresponding to the 2.5GBASE-T variable-rate full-duplex communication mode is 1875 Mbps. Correspondingly, the PMA at the physical layer of the first device and the PMA at the physical layer of the second device perform data communication at a communication rate of 1875 Mbps through the twisted pair A, the twisted pair B, and the twisted pair C.

Case 2: As shown in FIG. 9A, if the first device and the second device perform data communication in the 2.5GBASE-T variable-rate full-duplex communication mode through a twisted pair A and a twisted pair B (that is, two twisted pairs are used), a communication rate corresponding to the 2.5GBASE-T variable-rate full-duplex communication mode is 1.25 Gbps. Correspondingly, the PMA at the physical layer of the first device and the PMA at the physical layer of the second device perform communication at a communication rate of 1.25 Gbps through the twisted pair A and the twisted pair B.

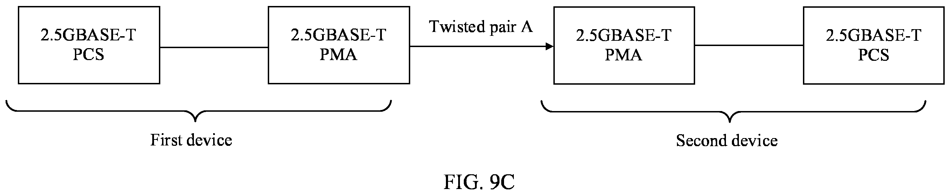

Case 3: As shown in FIG. 9C, if the first device and the second device perform data communication in the 2.5GBASE-T variable-rate full-duplex communication mode through a twisted pair A (that is, one twisted pair is used), a communication rate corresponding to the 2.5GBASE-T variable-rate full-duplex communication mode is 625 Mbps. Correspondingly, the PMA at the physical layer of the first device and the PMA at the physical layer of the second device perform data communication at a communication rate of 625 Mbps through the twisted pair A, and the first device and the second device also perform communication at a communication rate of 625 Mbps through the twisted pair A.

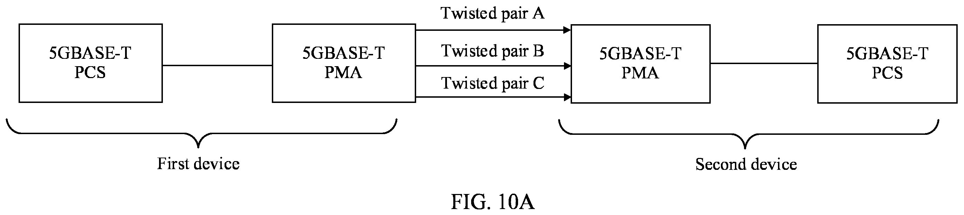

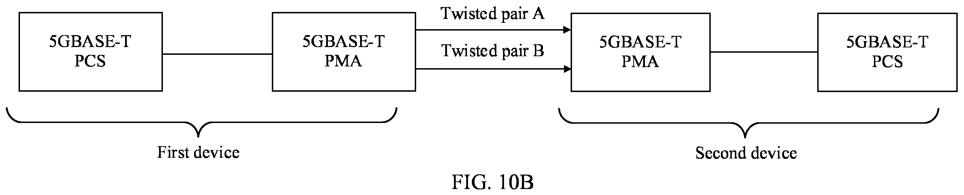

Example 2: As shown in FIG. 10A and FIG. 10B, 5GBASE-T full-duplex communication is used as an example of the first communication mode, and the variable-rate communication mode may be 5GBASE-T variable-rate full-duplex communication. The 5GBASE-T full-duplex communication is a communication mode using four twisted pairs. Correspondingly, the 5GBASE-T variable-rate full-duplex communication may be a communication mode using three twisted pairs, a communication mode using two twisted pairs, or a communication mode using one twisted pair.

Case 1: As shown in FIG. 10A, if the first device and the second device perform data communication in the 5GBASE-T variable-rate full-duplex communication mode through a twisted pair A, a twisted pair B, and a twisted pair C (that is, three twisted pairs are used), a communication rate corresponding to the 5GBASE-T variable-rate full-duplex communication mode is 3.75 Gbps. Correspondingly, the PMA at the physical layer of the first device and the PMA at the physical layer of the second device perform communication at a communication rate of 3.75 Gbps through the twisted pair A, the twisted pair B, and the twisted pair C.

Case 2: As shown in FIG. 10A, if the first device and the second device perform data communication in the 5GBASE-T variable-rate full-duplex communication mode through a twisted pair A and a twisted pair B (that is, two twisted pairs are used), a communication rate corresponding to the 5GBASE-T variable-rate full-duplex communication mode is 2.5 Gbps. Correspondingly, the PMA at the physical layer of the first device and the PMA at the physical layer of the second device also perform communication at a communication rate of 2.5 Gbps through the twisted pair A and the twisted pair B.

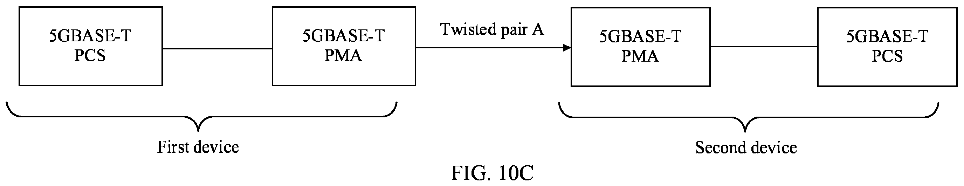

Case 3: As shown in FIG. 10C, if the first device and the second device perform data communication in the 5GBASE-T variable-rate full-duplex communication mode through a twisted pair A (that is, one twisted pair is used), a communication rate corresponding to the 5GBASE-T variable-rate full-duplex communication mode is 1.25 Gbps. Correspondingly, the PMA at the physical layer of the first device and the PMA at the physical layer of the second device perform communication at a communication rate of 1.25 Gbps through the twisted pair A.

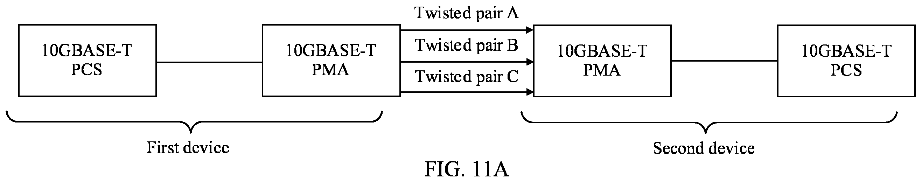

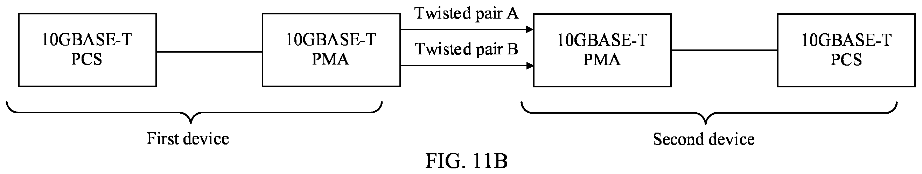

Example 3: As shown in FIG. 11A and FIG. 11B, 10GBASE-T full-duplex communication is used as an example of the first communication mode, and the variable-rate communication mode may be 10GBASE-T variable-rate full-duplex communication. The 10GBASE-T full-duplex communication is a communication mode using four twisted pairs. Correspondingly, the 10GBASE-T variable-rate full-duplex communication may be a communication mode using three twisted pairs, a communication mode using two twisted pairs, or a communication mode using one twisted pair.

Case 1: As shown in FIG. 11A, if the first device and the second device perform data communication in the 10GBASE-T variable-rate full-duplex communication mode through a twisted pair A, a twisted pair B, and a twisted pair C (that is, three twisted pairs are used), a communication rate corresponding to the 10GBASE-T variable-rate full-duplex communication mode is 7.5 Gbps. Correspondingly, the PMA at the physical layer of the first device and the PMA at the physical layer of the second device perform communication at a communication rate of 7.5 Gbps through the twisted pair A, the twisted pair B, and the twisted pair C.

Case 2: As shown in FIG. 11A, if the first device and the second device perform data communication in the 10GBASE-T variable-rate full-duplex communication mode through a twisted pair A and a twisted pair B (that is, two twisted pairs are used), a communication rate corresponding to the 10GBASE-T variable-rate full-duplex communication mode is 5 Gbps. Correspondingly, the PMA at the physical layer of the first device and the PMA at the physical layer of the second device perform communication at a communication rate of 5 Gbps through the twisted pair A and the twisted pair B.

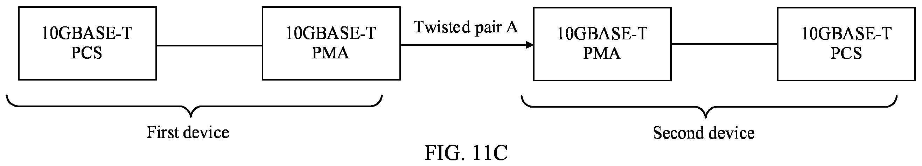

Case 3: As shown in FIG. 11C, if the first device and the second device perform data communication in the 10GBASE-T variable-rate full-duplex communication mode through a twisted pair A (that is, one twisted pair is used), a communication rate corresponding to the 10GBASE-T variable-rate full-duplex communication mode is 2.5 Gbps. Correspondingly, the PMA at the physical layer of the first device and the PMA at the physical layer of the second device perform communication at a communication rate of 2.5 Gbps through the twisted pair A.

The type and/or the quantity of twisted pairs used in the variable-rate communication mode in the foregoing Example 1 to Example 3 are merely examples, and are not a limitation on the type and/or the quantity of twisted pairs used in the variable-rate communication mode in this embodiment of this application. In another possible embodiment, the first device and the second device may perform data communication in the variable-rate communication mode through more twisted pairs.

In this embodiment of this application, communication between a chip on which a physical layer of the first device is located and a chip on which a data link layer of the first device is located is performed through a medium independent interface, and a communication rate of the medium independent interface is less than or equal to the communication rate corresponding to the variable-rate communication mode. In this way, when the physical layer of the first device and the data link layer of the first device are deployed on two different chips, the two chips may communicate with each other through the medium independent interface.

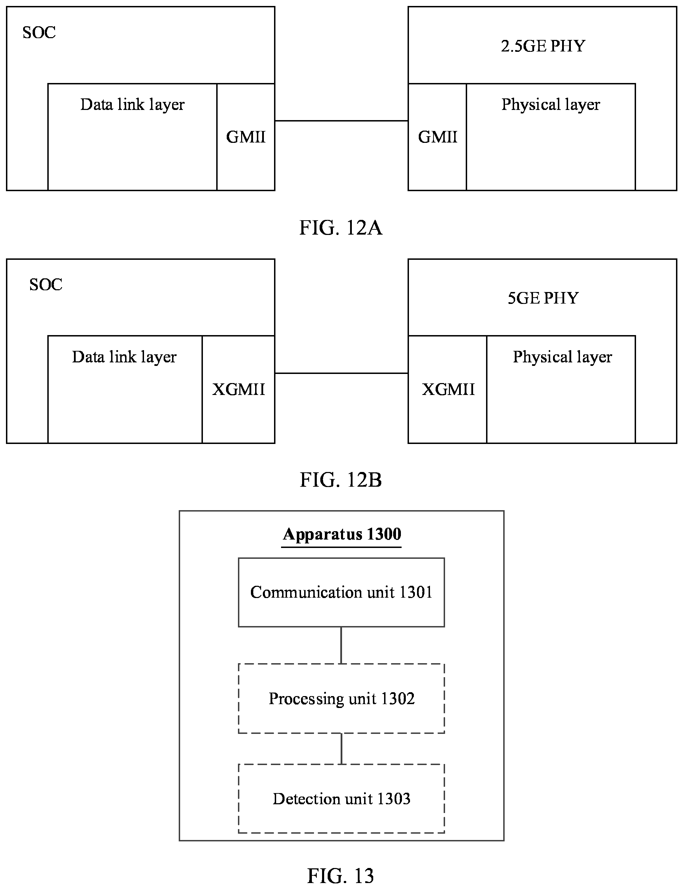

For example, as shown in FIG. 12A, the variable-rate communication mode uses a variable-rate communication mode of 2.5GBASE-T as an example. When a physical layer of the first device is deployed on an Ethernet physical layer (PHY) chip, and a data link layer of the first device is deployed on a system on chip (System On Chip, SOC), the PHY chip and the SOC may be connected and communicate with each other through a GMII interface. A communication rate corresponding to the GMII interface may be, for example, 1 Gbps.

When the physical layer of the first device is deployed on the PHY chip, an actual communication rate of the PHY chip is determined by a communication rate corresponding to the GMII interface and the communication rate corresponding to the variable-rate communication mode. In a possible case, the actual communication rate of the PHY chip is a smaller communication rate in the communication rate corresponding to the GMII interface and the communication rate corresponding to the variable-rate communication mode. For example, a communication rate corresponding to the GMII interface is 1 Gbps, and a communication rate corresponding to the variable-rate communication mode is a rate of 1.25 Gbps. Because 1 Gbps<1.25 Gbps, an actual communication rate of the PHY chip is 1 Gbps.

For another example, as shown in FIG. 12B, the variable-rate communication mode uses a variable-rate communication mode of 5GBASE-T as an example. When a physical layer of the first device is deployed on a PHY chip, and a data link layer of the first device is deployed on an SOC, the PHY chip and the SOC may be connected and communicate with each other through an XGMII interface. A communication rate corresponding to the XGMII interface may be, for example, 3 Gbps.

Based on a same technical concept as the foregoing communication method, an embodiment of this application further provides a communication apparatus. As shown in FIG. 13, a communication apparatus 1300 is deployed on a first device, and the first device is connected to a second device through N twisted pairs. The communication apparatus 1300 includes a communication unit 1301. The communication unit 1301 is configured to: when the two twisted pairs are not faulty, send first information to the second device, where the first information represents that the first device supports a variable-rate communication mode, a communication rate corresponding to the variable-rate communication mode is less than a first communication rate corresponding to a first communication mode and is greater than or equal to a second communication rate, and the first communication mode is a communication mode using the four twisted pairs; and the communication unit 1301 is further configured to receive second information from the second device, where the second information represents that the second device supports the variable-rate communication mode.

In a possible implementation, the communication unit 1301 is further configured to perform data communication with the second device in the variable-rate communication mode.

In a possible implementation, that the communication unit 1301 is configured to perform data communication with the second device in the variable-rate communication mode includes: The communication unit 1301 performs data communication with the second device in the variable-rate communication mode through N twisted pairs of the four twisted pairs, where N is a positive integer less than 4.

In a possible implementation, the first information further represents that the first device supports the first communication mode, and the second information further represents that the second device supports the first communication mode. The communication apparatus 1300 further includes a processing unit 1302. The processing unit 1302 is configured to train the first communication mode by using the four twisted pairs; and that the communication unit 1301 performs data communication with the second device in the variable-rate communication mode through the N twisted pairs of the four twisted pairs includes: When training the first communication mode by using the N twisted pairs succeeds, and training the first communication mode by using a twisted pair of the four twisted pairs other than the N twisted pairs fails, the communication unit 1301 performs data communication with the second device in the variable-rate communication mode through the N twisted pairs.

In a possible implementation, the communication apparatus 1300 further includes a detection unit 1303. The detection unit 1303 is configured to perform fault detection on the four twisted pairs; and that the communication unit 1301 performs data communication with the second device in the variable-rate communication mode through the N twisted pairs of the four twisted pairs includes: When the N twisted pairs are not faulty, and a twisted pair of the four twisted pairs other than the N twisted pairs is faulty, the communication unit 1301 performs data communication with the second device in the variable-rate communication mode through the N twisted pairs.

In a possible implementation, that the N twisted pairs are not faulty includes that the N twisted pairs are not disconnected, or the N twisted pairs are twisted pairs with better channel quality among the four twisted pairs.

In a possible implementation, the first information further represents that the first device supports the first communication mode, and the second information further represents that the second device supports the first communication mode. The communication apparatus 1300 further includes a processing unit 1302. The processing unit 1302 is configured to train the first communication mode by using the four twisted pairs; and that the communication unit 1301 performs data communication with the second device in the variable-rate communication mode through the N twisted pairs of the four twisted pairs includes: When a quantity of failures of training the first communication mode by using the four twisted pairs reaches G, the communication unit 1301 performs data communication with the second device in the variable-rate communication mode through the N twisted pairs, where G is a positive integer greater than or equal to 1.

In a possible implementation, the four twisted pairs include a first group of twisted pairs and a second group of twisted pairs, the first group of twisted pairs includes a twisted pair A and a twisted pair B, and the second group of twisted pairs includes a twisted pair C and a twisted pair D. The communication apparatus 1300 further includes a detection unit 1303. The detection unit 1303 is further configured to: perform fault detection on the first group of twisted pairs in a first time window, and if the first group of twisted pairs is not faulty, determine the first group of twisted pairs as the two twisted pairs; or perform fault detection on the second group of twisted pairs in a second time window, and if the second group of twisted pairs is not faulty, determine the second group of twisted pairs as the two twisted pairs, where the first time window is different from the second time window.

In a possible implementation, communication between a chip on which a physical layer of the first device is located and a chip on which a data link layer is located is performed through a medium independent interface, where a communication rate of the medium independent interface is less than or equal to the communication rate corresponding to the variable-rate communication mode.

In a possible implementation, the first communication mode includes any one of the following: 10GBASE-T full-duplex communication, 5GBASE-T full-duplex communication, 2.5GBASE-T full-duplex communication, or 1GBASE-T full-duplex communication.

It should be noted that division into the modules in embodiments of this application is an example, and is merely logical function division. In actual implementation, there may be another division manner. In addition, functional units in embodiments of this application may be integrated into one processing unit, or may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the integrated unit may be stored in a storage medium as a computer software product, and includes several instructions for instructing a computer device (which may be a personal computer, a server, or a network device) or a processor (processor) to perform all or some of the steps of the methods in embodiments of this application.

Based on a same technical concept, an embodiment of this application further provides an electronic device 1400, configured to perform the method in the foregoing embodiment. The electronic device 1400 may be the first device or the second device.

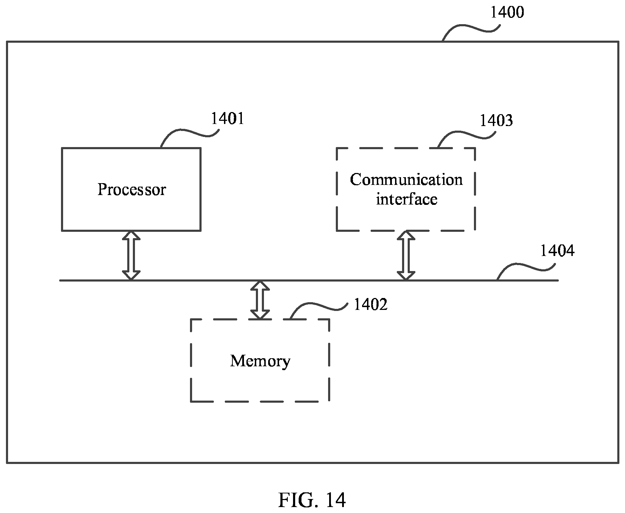

As shown in FIG. 14, the electronic device 1400 may include a processor 1401, configured to execute a program or instructions stored in a memory 1402. When the program or the instructions stored in the memory 1402 are executed, the processor is configured to perform the method in the foregoing embodiment.

Optionally, the electronic device 1400 may further include a communication interface 1403. In FIG. 14, dashed lines indicate that the communication interface 1403 is optional for the electronic device 1400.

A quantity of processors 1401, a quantity of memories 1402, and a quantity of communication interfaces 1403 do not constitute a limitation on embodiments of this application, and may be configured according to a service requirement during specific implementation.

Optionally, the memory 1402 is located outside the electronic device 1400.

Optionally, the electronic device 1400 includes the memory 1402. The memory 1402 is connected to the at least one processor 1401, and the memory 1402 stores instructions that can be executed by the at least one processor 1401. In FIG. 14, dashed lines indicate that the memory 1402 is optional for the electronic device 1400.

The processor 1401 and the memory 1402 may be coupled through an interface circuit, or may be integrated together. This is not limited herein.

A specific connection medium between the processor 1401, the memory 1402, and the communication interface 1403 is not limited in embodiments of this application. In this embodiment of this application, the processor 1401, the memory 1402, and the communication interface 1403 are connected to each other through a bus 1404 in FIG. 14. The bus is represented by a bold line in FIG. 14. A manner of connection between other components is merely an example for description, and does not constitute a limitation. The bus may be classified into an address bus, a data bus, a control bus, and the like. For ease of representation, only one bold line is used in FIG. 14 for representation, but this does not mean that there is only one bus or only one type of bus.

It should be understood that the processor mentioned in this embodiment of this application may be implemented by hardware or software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or a transistor logic device, a discrete hardware component, or the like. The general-purpose processor may be a microprocessor, or the processor may be any conventional processor, or the like.

It should be understood that the memory mentioned in embodiments of this application may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any memory of another proper type.

An embodiment of this application further provides a communication system, including a first device and a second device. The first device and the second device may implement the communication method in the foregoing method embodiment.

An embodiment of this application further provides a computer-readable medium. The computer-readable medium stores a computer program. When the computer program is executed by a computer, the communication method in the foregoing method embodiment is implemented.

An embodiment of this application further provides a computer program product, including a computer program. When the computer program is executed by a computer, the communication method in the foregoing method embodiment is implemented.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer instructions are loaded and executed on a computer, all or some of the procedures or functions according to embodiments of this application are generated. The computer may be the foregoing communication apparatus. The computer instructions may be stored in a computer-readable storage medium, or may be transmitted from one computer-readable storage medium to another computer-readable storage medium. The computer-readable storage medium may be the foregoing storage medium or the foregoing memory.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected according to actual requirements to achieve the objectives of the solutions of embodiments in this application.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

With descriptions of the foregoing implementations, a person skilled in the art may clearly understand that this application may be implemented by hardware, firmware, or a combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium accessible to a computer.

In conclusion, the foregoing descriptions are merely embodiments of the technical solutions of this application, but are not intended to limit the protection scope of this application. Any modification, equivalent replacement, improvement, or the like made within the principle of this application should fall within the protection scope of this application.

## Claims

1. A communication method, applied to a first device, wherein the first device is connected to a second device through two twisted pairs or four twisted pairs, and the method comprises:
when the two twisted pairs are not faulty, sending first information to the second device, wherein the first information represents that the first device supports a variable-rate communication mode, a communication rate corresponding to the variable-rate communication mode is less than a first communication rate corresponding to a first communication mode and is greater than or equal to a second communication rate, and the first communication mode is a communication mode using the four twisted pairs; and
receiving second information from the second device, wherein the second information represents that the second device supports the variable-rate communication mode.

2. The method according to claim 1, wherein the method further comprises:
performing data communication with the second device in the variable-rate communication mode.

3. The method according to claim 2, wherein performing data communication with the second device in the variable-rate communication mode comprises:
performing data communication with the second device in the variable-rate communication mode through N twisted pairs of the four twisted pairs, wherein N is a positive integer less than 4.

4. The method according to claim 3, wherein the first information further represents that the first device supports the first communication mode, and the second information further represents that the second device supports the first communication mode;
the method further comprises: training the first communication mode by using the four twisted pairs; and
performing data communication with the second device in the variable-rate communication mode through the N twisted pairs of the four twisted pairs comprises: when training the first communication mode by using the N twisted pairs succeeds, and training the first communication mode by using a twisted pair of the four twisted pairs other than the N twisted pairs fails, performing data communication with the second device in the variable-rate communication mode through the N twisted pairs.

5. The method according to claim 3, wherein
the method further comprises: performing fault detection on the four twisted pairs; and
performing data communication with the second device in the variable-rate communication mode through the N twisted pairs of the four twisted pairs comprises: when the N twisted pairs are not faulty, and a twisted pair of the four twisted pairs other than the N twisted pairs is faulty, performing data communication with the second device in the variable-rate communication mode through the N twisted pairs.

6. The method according to claim 5, wherein that the N twisted pairs are not faulty comprises that the N twisted pairs are not disconnected, or the N twisted pairs are twisted pairs with better channel quality among the four twisted pairs.

7. The method according to claim 3, wherein the first information further represents that the first device supports the first communication mode, and the second information further represents that the second device supports the first communication mode;
the method further comprises: training the first communication mode by using the four twisted pairs; and
performing data communication with the second device in the variable-rate communication mode through the N twisted pairs of the four twisted pairs comprises: when a quantity of failures of training the first communication mode reaches G, performing data communication with the second device in the variable-rate communication mode through the N twisted pairs, wherein G is a positive integer greater than or equal to 1.

8. The method according to any one of claims 1 to 7, wherein the four twisted pairs comprise a first group of twisted pairs and a second group of twisted pairs, the first group of twisted pairs comprises a twisted pair A and a twisted pair B, and the second group of twisted pairs comprises a twisted pair C and a twisted pair D; and
the method further comprises:
performing fault detection on the first group of twisted pairs in a first time window, and if the first group of twisted pairs is not faulty, determining the first group of twisted pairs as the two twisted pairs; or
performing fault detection on the second group of twisted pairs in a second time window, and if the second group of twisted pairs is not faulty, determining the second group of twisted pairs as the two twisted pairs, wherein
the first time window is different from the second time window.

9. The method according to any one of claims 1 to 8, wherein the method further comprises:
performing communication between a chip on which a physical layer of the first device is located and a chip on which a data link layer is located through a medium independent interface, wherein a communication rate of the medium independent interface is less than or equal to the communication rate corresponding to the variable-rate communication mode.

10. The method according to any one of claims 1 to 9, wherein the first communication mode comprises any one of the following:
10GBASE-T full-duplex communication, 5GBASE-T full-duplex communication, 2.5GBASE-T full-duplex communication, or 1GBASE-T full-duplex communication.

11. A communication apparatus, wherein the communication apparatus is deployed on a first device, the first device is connected to a second device through two twisted pairs or four twisted pairs, and the apparatus comprises a communication unit;
the communication unit is configured to: when the two twisted pairs are not faulty, send first information to the second device, wherein the first information represents that the first device supports a variable-rate communication mode, a communication rate corresponding to the variable-rate communication mode is less than a first communication rate corresponding to a first communication mode and is greater than or equal to a second communication rate, and the first communication mode is a communication mode using the four twisted pairs; and
the communication unit is further configured to receive second information from the second device, wherein the second information represents that the second device supports the variable-rate communication mode.

12. The apparatus according to claim 11, wherein the communication unit is further configured to:
perform data communication with the second device in the variable-rate communication mode.

13. The apparatus according to claim 12, wherein that the communication unit is configured to perform data communication with the second device in the variable-rate communication mode comprises:
the communication unit performs data communication with the second device in the variable-rate communication mode through N twisted pairs of the four twisted pairs, wherein N is a positive integer less than 4.

14. The apparatus according to claim 13, wherein the first information further represents that the first device supports the first communication mode, and the second information further represents that the second device supports the first communication mode;
the apparatus further comprises a processing unit, wherein the processing unit is configured to train the first communication mode by using the four twisted pairs; and
that the communication unit performs data communication with the second device in the variable-rate communication mode through the N twisted pairs of the four twisted pairs comprises: when training the first communication mode by using the N twisted pairs succeeds, and training the first communication mode by using a twisted pair of the four twisted pairs other than the N twisted pairs fails, the communication unit performs data communication with the second device in the variable-rate communication mode through the N twisted pairs.

15. The apparatus according to claim 13, wherein
the apparatus further comprises a detection unit, wherein the detection unit is configured to perform fault detection on the four twisted pairs; and
that the communication unit performs data communication with the second device in the variable-rate communication mode through the N twisted pairs of the four twisted pairs comprises: when the N twisted pairs are not faulty, and a twisted pair of the four twisted pairs other than the N twisted pairs is faulty, the communication unit performs data communication with the second device in the variable-rate communication mode through the N twisted pairs.

16. The apparatus according to claim 15, wherein that the N twisted pairs are not faulty comprises that the N twisted pairs are not disconnected, or the N twisted pairs are twisted pairs with better channel quality among the four twisted pairs.

17. The apparatus according to claim 13, wherein the first information further represents that the first device supports the first communication mode, and the second information further represents that the second device supports the first communication mode;
the apparatus further comprises a processing unit, wherein the processing unit is configured to train the first communication mode by using the four twisted pairs; and
that the communication unit performs data communication with the second device in the variable-rate communication mode through the N twisted pairs of the four twisted pairs comprises: when a quantity of failures of training the first communication mode by using the four twisted pairs reaches G, the communication unit performs data communication with the second device in the variable-rate communication mode through the N twisted pairs, wherein G is a positive integer greater than or equal to 1.

18. The apparatus according to any one of claims 11 to 17, wherein the four twisted pairs comprise a first group of twisted pairs and a second group of twisted pairs, the first group of twisted pairs comprises a twisted pair A and a twisted pair B, and the second group of twisted pairs comprises a twisted pair C and a twisted pair D; and
the apparatus further comprises the detection unit, wherein the detection unit is configured to:
perform fault detection on the first group of twisted pairs in a first time window, and if the first group of twisted pairs is not faulty, determine the first group of twisted pairs as the two twisted pairs; or
perform fault detection on the second group of twisted pairs in a second time window, and if the second group of twisted pairs is not faulty, determine the second group of twisted pairs as the two twisted pairs, wherein
the first time window is different from the second time window.

19. The apparatus according to any one of claims 11 to 18, wherein communication between a chip on which a physical layer of the first device is located and a chip on which a data link layer is located is performed through a medium independent interface, and a communication rate of the medium independent interface is less than or equal to the communication rate corresponding to the variable-rate communication mode.

20. The apparatus according to any one of claims 11 to 19, wherein the first communication mode comprises any one of the following:
10GBASE-T full-duplex communication, 5GBASE-T full-duplex communication, 2.5GBASE-T full-duplex communication, or 1GBASE-T full-duplex communication.

21. A communication apparatus, comprising a processor and a communication interface, wherein
the communication interface is configured to receive and send data; and
the processor is coupled to a memory, and is configured to execute a computer program stored in the memory, to enable the apparatus to perform the method according to any one of claims 1 to 10.

22. A computer-readable storage medium, comprising a computer program, wherein when the computer program is run on a computer, the method according to any one of claims 1 to 10 is performed.

23. A computer program product, comprising a computer program, wherein when the computer program is run on a computer, the method according to any one of claims 1 to 10 is performed.

24. A communication system, comprising a first device and a second device that are configured to perform the method according to any one of claims 1 to 10, wherein the first device is connected to the second device through two twisted pairs or four twisted pairs.

25. A chip system, wherein the chip system comprises:
a processor and a memory, wherein the processor is coupled to the memory, the memory is configured to store a program or instructions, and when the program or the instructions are executed by the processor, the method according to any one of claims 1 to 10 is implemented.
